# EUROPEAN PATENT APPLICATION

(11) **EP 4 691 996 A1**
(43) Date of publication of application: **11.02.2026**
(21) Application number: 24791940.0
(22) Date of filing: 12.04.2024
(51) Int. Cl.: C01G 53/00, H01M 4/525, H01M 4/62, H01M 10/0525

(54) **LITHIUM-ION BATTERY POSITIVE ELECTRODE MATERIAL PRECURSOR AND PREPARATION METHOD THEREFOR, LITHIUM-ION BATTERY POSITIVE ELECTRODE MATERIAL, LITHIUM-ION BATTERY AND ELECTRIC DEVICE**

(30) Priority: 20.04.2023 CN 202310429383
(71) Applicant: CNGR Advanced Material Co., Ltd., Tongren, Guizhou 554300 (CN); Hunan CNGR New Energy Science & Technology Co., Ltd., Ningxiang Changsha, Hunan 410600 (CN)
(72) Inventor: YIN, Shuo, Tongren, Guizhou 554300 (CN); TANG, Jiajun, Tongren, Guizhou 554300 (CN); WANG, Yiqiao, Tongren, Guizhou 554300 (CN); ZHANG, Yuying, Tongren, Guizhou 554300 (CN); MU, Xiaowen, Tongren, Guizhou 554300 (CN); LI, Shoukui, Tongren, Guizhou 554300 (CN)
(74) Representative: Loyer & Abello
(86) International application number: PCT/CN2024/087550
(87) International publication number: WO 2024/217355

(57) **Abstract**

The present application relates to the field of lithium-ion batteries, and provides a lithium-ion battery positive electrode material precursor and a preparation method therefor, a lithium-ion battery positive electrode material, a lithium-ion battery and an electric device. The lithium-ion battery positive electrode material precursor comprises a plurality of primary particles, one primary particle comprises a plurality of neatly stacked single-sheet layers, and the edges of the single-sheet layers are flat, wherein N is a positive integer, and N is greater than or equal to 2. The preparation method for the lithium-ion battery positive electrode material precursor comprises: introducing raw materials including a nickel-containing metal salt solution, a precipitant and a complexing agent into a base solution for reaction, and during the reaction, controlling the pH value to be 9.8-11.3, the ammonia concentration to be 2-12g/L, and the concentration of nickel in a supernatant to be 70-350ppm; and after the reaction, carrying out solid-liquid separation, drying, sieving and demagnetizing to obtain the lithium-ion battery positive electrode material precursor. In the lithium-ion battery positive electrode material precursor, the plurality of single-sheet layers forming the primary particles have the characteristics of high regularity and integrity, and the prepared positive electrode material has higher cycle, capacity and safety.

## Description

### CROSS-REFERENCE TO RELATED APPLICATION

The present application claims the priority to the Chinese patent application with the filing No. 202310429383.3 filed with the China National Intellectual Property Administration on April 20, 2023, and entitled "LITHIUM-ION BATTERY POSITIVE ELECTRODE MATERIAL PRECURSOR AND PREPARATION METHOD THEREFOR, LITHIUM-ION BATTERY POSITIVE ELECTRODE MATERIAL, LITHIUM-ION BATTERY AND ELECTRIC DEVICE", contents of which are incorporated herein by reference in entirety.

### TECHNICAL FIELD

The present disclosure relates to the field of lithium-ion batteries, in particular to a lithium-ion battery positive electrode material precursor and a preparation method therefor, a lithium-ion battery positive electrode material, a lithium-ion battery and an electric device (electrically related equipment).

### BACKGROUND ART

With the development of energy storage technologies, the threshold requirements and cost demands for volumetric energy density of lithium battery materials are rapidly increasing. Under this background, positive electrode materials are progressively evolving toward higher nickel content. While high-nickel positive electrode materials offer advantages in cost and capacity, they suffer from poor cycling performance accompanied by significant performance degradation.

It is proven that the phase transitions of high nickel positive electrode material during charging and discharging processes lead to the change of crystal volume of positive electrode material, generating anisotropic stress. This stress readily induces primary cracks within and between crystals, triggering a vicious cycle of crack propagation, which in turn initiates more side reactions. Ultimately, this causes structural collapse and fragmentation of the entire positive electrode material structure, resulting in severe battery performance degradation.

The positive electrode material precursors are highly customized standard products for positive electrode materials and serve as critical materials in positive electrode production. The characteristics of precursors directly determine the main physicochemical properties of positive electrode materials, such as particle size, particle size distribution, metal element ratios excluding lithium, impurity content, etc., thus affecting the core electrochemical properties of lithium batteries, such as rate capability, energy density and cycle life.

Currently, commercially available primary particles of high-nickel precursors exhibit significant variations in the shape and size of multiple single-sheet layers, along with issues such as fragmentation or misaligned stacking. This results in poor regularity of primary particles and a broad distribution range in their length and width. After sintering into positive electrode materials, electron microscopy images of secondary particles reveal poor primary particle regularity. Although it can have high capacity with the advantage of high proportion of nickel, the material itself has poor regularity of primary particles, poor crystallinity and numerous crystal defects, leading to inferior cycling performance in the sintered positive electrode, thus restricting the full application of high-nickel materials in lithium-ion batteries.

### SUMMARY

The objective of the present disclosure is to provide a lithium-ion battery positive electrode material precursor, a preparation method therefor, a lithium-ion battery positive electrode material, a lithium-ion battery and an electrically related equipment, so as to solve the above problems.

In order to achieve the above objectives, the following technical solutions are adopted in the present disclosure.

A lithium-ion battery positive electrode material precursor, wherein a precursor secondary particle includes N primary particles, and a primary particle includes N neatly stacked single-sheet layers, and an edge of the single-sheet layers is flat, wherein
N is a positive integer and N≥2.

Preferably, in the precursor secondary particle, at least 60% of the primary particles meet requirement ①: a primary particle length is not less than 200nm, a primary particle width is not less than 50nm, and a length-to-width ratio of the primary particles is not less than 1.2.

Preferably, in the precursor secondary particle, at least 70% of the primary particles meet requirement ②: the primary particle length is 200nm-3000nm, the primary particle width is 50nm-300nm, and the length-to-width ratio of the primary particles is not less than 1.2.

The length, width, and length-to-width ratio of primary particles of the precursor must remain within specified ranges. Deviation from these ranges results in poor regularity and integrity of primary particles, ultimately compromising the electrochemical performance of the battery made of the sintered positive electrode materials. Specifically, if the width of the primary particles is too narrow and the length is too short, the pores in the corresponding precursor secondary particles are too small, and the BET value of the specific surface area is too small, making the porosity of the sintered positive electrode material low and prolonging the Li ion transmission path, thus affecting the capacity performance. If the width of the primary particles is too wide and the length is too long, the pores in the corresponding precursor secondary particles are too large, and the BET value of the specific surface area is too large, making the porosity of the sintered positive electrode material high and leading to cracks in the secondary particles, thus affecting the cycle performance.

Preferably, in the precursor secondary particle, at least 20% of the primary particles meet requirement ③:
the single-sheet layers include a fractured single-sheet layer and/or an unfractured single-sheet layer, and the fractured single-sheet layer is in a linear shape or a kinking shape, and
when the fractured single-sheet layer is in the kinking shape, a minimum included angle γ between an extension line of a linear portion and a kinking portion is less than or equal to 30°.

Preferably, in the precursor secondary particle, at least 20% of the primary particles meet at least one of following requirements.

Requirement ④: in the primary particle, the single-sheet layers include a fractured single-sheet layer and/or an unfractured single-sheet layer, and a fracture count of each fractured single-sheet layer is less than or equal to 2.

Requirement ⑤: in the primary particle, the single-sheet layers include the fractured single-sheet layer and/or the unfractured single-sheet layer, and a length of a longest fragment in each fractured single-sheet layer accounts for not less than 50% of a total length of the single-sheet layer in which the fractured single-sheet layer is located.

Requirement ⑥: in the primary particle, the single-sheet layers include the fractured single-sheet layers and/or the unfractured single-sheet layers, a sum of a total length of all unfractured single-sheet layers and a total length of the longest fragments from all fractured single-sheet layers accounts for not less than 60% of a total length of all single-sheet layers. Preferably, the lithium-ion battery positive electrode material precursor meets at least one of following conditions:
A. a particle size D50 of the precursor is 4µm-20µm;
B. a full width at half maximum FWHM (001) of the precursor with a (001) facet corresponding to a diffraction angle 2θ = 19.2±1° and a full width at half maximum FWHM (101) of the precursor with a (101) facet corresponding to a diffraction angle 20 = 38.5±1° are both less than 0.550°;
C. a specific surface area BET of the precursor is 3m²/g-20m²/g;
D. a general chemical formula of the precursor is NiₓM₁₋ₓ(OH)₂, wherein 0.6 ≤ x < 1, and M is at least one of Co, Mn, Al, Fe, Ti, Zr, Mo, Cr, W, B, Mg, Ba, Nb and Sr, and
E. a chemical formula of the precursor is NiₓCo_{y}Mn_{z}M¹_{1-x-y-z}(OH)₂, where 0.6 ≤ x < 1, 0≤y≤0.4, 0≤z≤0.4, and 1-x-y ≥ 0; M¹ is at least one of Al, Fe, Ti, Zr, Mo, Cr, W, B, Mg, Ba, Nb and Sr.

A preparation method for the lithium-ion battery positive electrode material precursor is further provided in the present disclosure, including:
introducing a raw material including a nickel-containing metal salt solution, a precipitant and a complexing agent into a base solution for reaction, and during the reaction, controlling a pH value to be 9.8-11.3, an ammonia concentration to be 2g/L-12g/L, and a concentration of nickel in a supernatant to be 70ppm-350ppm; and after the reaction, carrying out a solid-liquid separation, a drying, a sieving and a demagnetizing, so as to obtain the lithium-ion battery positive electrode material precursor.

The above preparation method satisfies at least one of following conditions:
a. a nickel-containing metal in the nickel-containing metal salt solution contains Ni, and at least one of Co and Mn;
b. the nickel-containing metal in the nickel-containing metal salt solution only contains Ni;
c. the raw material introduced into the base solution further includes a doping metal salt solution, wherein a doping metal in the doping metal salt solution includes at least one of Al, Fe, Ti, Zr, Mo, Cr, W, B, Mg, Ba, Nb and Sr;
d. the precipitant includes a sodium hydroxide solution, and the complexing agent includes an ammonia solution;
e. a flow rate of the nickel-containing metal salt solution is 2%/h-10%/h of an available volume of a reaction vessel, a flow rate of the precipitant is 0.5%/h-3.5%/h of the available volume of the reaction vessel, and a flow rate of the complexing agent is 0.01%/h-1%/h of the available volume of the reaction vessel;
f. the base solution includes the sodium hydroxide solution, the ammonia solution and a water;
g. a pH of the base solution is 10.5-12.3, and an ammonia concentration of the base solution is 3.4g/L-6g/L; optionally, the pH of the base solution is 10.5-11.90, and
h. a mother liquor is discharged during the reaction process, and a total liquid feeding rate equals a sum of flow rates of feeding the raw materials into the base solution simultaneously, and a discharge rate of the mother liquor is consistent with a total liquid feeding rate.

A lithium-ion battery positive electrode material is further provided in the present disclosure, wherein a raw material of the lithium-ion battery positive electrode material includes the lithium-ion battery positive electrode material precursor.

A lithium-ion battery is further provided in the present disclosure, including the lithium-ion battery positive electrode material.

An electrically related equipment is further provided in the present disclosure, including the lithium-ion battery.

Compared with the prior art, the present disclosure includes the following beneficial effects.

The lithium-ion battery positive electrode material precursor provided by the present disclosure is composed of primary particles, and each primary particle includes a plurality of neatly stacked single-sheet layers, and the edges of the single-sheet layers are flat. The multiple single-sheet layers constituting the primary particles exhibit the characteristics of high regularity and high integrity, indicating the narrow full widths at half maximum for the (001) facet and

(101) facet, thus indicating the high crystallinity and fewer crystal defects. These characteristics can effectively reduce the side reactions when the battery is used and inhibit the damage of the secondary particle structure during the repeated charging and discharging process, so as to improve the capacity retention after cycling.

The high regularity of single-sheet layers means that the shapes and sizes of multiple single-sheet layers in a primary particle are consistent, and their edges are flat and the single-sheet layers are neatly stacked. The high integrity of single-sheet layers means that there are few fractured single-sheet layers in the primary particle, and the fracture count of fractured single-sheet layers are small, and long fragments account for a large proportion; the kinking deformation of the fractured single-sheet layer is small, and the minimum included angle γ between the extension line of the linear portion and the kinking portion is small.

According to the preparation method of the lithium-ion battery positive electrode material precursor provided by the present disclosure, by controlling the pH, the ammonia concentration and the nickel content in the supernatant during the reaction process, the precursor secondary particles formed by the aforementioned primary particles including a plurality of single-sheet layers are obtained. The process is simple and the product quality stability between batches is good.

The lithium-ion battery positive electrode material provided by the present disclosure has a relatively high capacity and cycle performance.

### BRIEF DESCRIPTION OF THE DRAWINGS

In order to more clearly illustrate the technical solutions of examples in the present disclosure, the drawing to be used in the examples will be briefly introduced below. It should be understood that the following drawing only shows some examples of the present disclosure, so they should not be regarded as limiting the scope of the present disclosure.
FIG. 1 is a schematic diagram of a primary particle and a single-sheet layer constituting the primary particle.
FIG. 2 is a schematic diagram of the length and width of a primary particle.
FIG. 3 is a schematic diagram of the minimum included angle γ between the extension line of the linear portion and the kinking portion of the fractured single-sheet layer in requirement ③.
FIG. 4 is a schematic diagram of a fractured single-sheet layer meeting requirements ④ and ⑤.
FIG. 5 is a schematic diagram of a fractured single-sheet layer that does not meet the requirement ⑤.
FIG. 6 is a schematic diagram of N fractured single-sheet layers in primary particles meeting the requirement ⑥.
FIG. 7 is a schematic diagram of a plurality of fractured single-sheet layers in primary particles that do not meet the requirement ⑥.
FIG. 8 is a partial surface SEM image of the secondary particles of the ternary positive electrode material precursor Ni_{0.95}Co_{0.04}Mn_{0.01}(OH)₂ for lithium-ion battery obtained in Example 1.
FIG. 9 is a XRD spectrum of the ternary positive electrode material precursor Ni_{0.95}Co_{0.04}Mn_{0.01}(OH)₂ for lithium-ion battery obtained in Example 1.
FIG. 10 is a partial surface SEM image of the secondary particles of the ternary positive electrode material precursor Ni_{0.95}Co_{0.04}Mn_{0.01}(OH)₂ for lithium-ion battery obtained in Example 2.
FIG. 11 is a XRD spectrum of the ternary positive electrode material precursor Ni_{0.95}Co_{0.04}Mn_{0.01}(OH)₂ for lithium-ion battery obtained in Example 2.
FIG. 12 is a partial surface SEM image of the secondary particles of the ternary positive electrode material precursor Ni_{0.95}Co_{0.04}Mn_{0.01}(OH)₂ for lithium-ion battery obtained in Example 3.
FIG. 13 is a XRD spectrum of the ternary positive electrode material precursor Ni_{0.95}Co_{0.04}Mn_{0.01}(OH)₂ for lithium-ion battery obtained in Example 3.
FIG. 14 is a partial surface SEM image of the secondary particles of the ternary positive electrode material precursor Ni_{0.95}Co_{0.04}Mn_{0.01}(OH)₂ for lithium-ion battery obtained in Comparative Example 1.
FIG. 15 is a XRD spectrum of the ternary positive electrode material precursor Ni_{0.95}Co_{0.04}Mn_{0.01}(OH)₂ for lithium-ion battery obtained in Comparative Example 1.
FIG. 16 is a partial surface SEM image of the secondary particles of the ternary positive electrode material precursor Ni_{0.95}Co_{0.04}Mn_{0.01}(OH)₂ for lithium-ion battery obtained in Comparative Example 2.
FIG. 17 is a XRD spectrum of the ternary positive electrode material precursor Ni_{0.95}Co_{0.04}Mn_{0.01}(OH)₂ for lithium-ion battery obtained in Comparative Example 2.

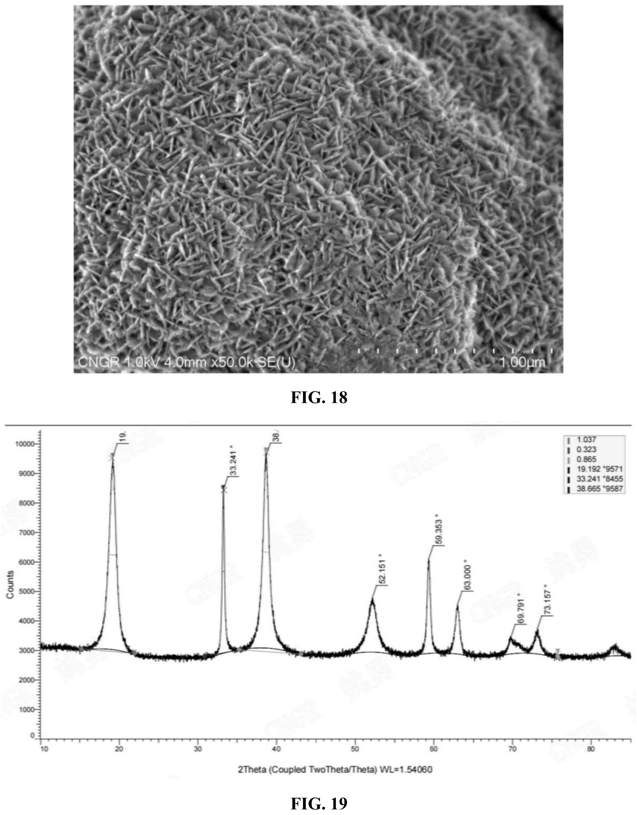

FIG. 18 is a partial surface SEM image of the secondary particles of the ternary positive electrode material precursor Ni_{0.95}Co_{0.04}Mn_{0.01}(OH)₂ for lithium-ion battery obtained in Comparative Example 3.
FIG. 19 is a XRD spectrum of the ternary positive electrode material precursor Ni_{0.95}Co_{0.04}Mn_{0.01}(OH)₂ for lithium-ion battery obtained in Comparative Example 4.
FIG. 20 is a SEM image with a box area of the partial surface of the secondary particles of the ternary positive electrode material precursor Ni_{0.95}Co_{0.04}Mn_{0.01}(OH)₂ for lithium-ion battery obtained in Comparative Example 2.

### DETAILED DESCRIPTION OF EMBODIMENTS

As used herein, the term:
"Made of" is synonymous with "containing". The terms "containing", "including", "having", "processing" or any other variation thereof used herein are intended to cover non-exclusive inclusion. For example, a composition, step, method, article or device containing listed elements is not necessarily limited to those elements, but can include other elements not explicitly listed or elements inherent to such composition, step, method, article or device.

The conjunction "consisting of" excludes any unspecified elements, steps or components. If used in the claim, this phrase will make the claim closed, so that it does not contain materials other than those described, except for conventional impurities associated therewith. The phrase "consisting of" appears in the clause of the claim body rather than immediately after the subject matter, it only defines the elements described in the clause; other elements are not excluded from the claims as a whole.

When the amount, concentration, or other value or parameter is represented in a range, a preferred range, or a range of upper and lower preferred values defined, it should be understood to specifically disclose all ranges formed by any pair of any upper bound or preferred values of any range and any lower bound or preferred value of any range, regardless of whether the range is individually disclosed. For example, when the range "1-5" is disclosed, the described range should be interpreted as including the ranges "1-4", "1-3", "1-2", "1-2 and 4-5", "1-3 and 5" and so on. When a numerical range is described herein, unless otherwise specified, the range is intended to include its end values and all integers and fractions within the range.

In these examples, unless otherwise specified, the parts and percentages mentioned are all by mass.

"Parts by mass" refers to the basic unit of measurement representing the proportional relationship of the masses of multiple components. One part can represent any unit mass, for example, one part can represent 1g, or it can represent 2.689g, etc. If the mass of component A is expressed as a part by mass and the mass of component B as b parts by mass, it indicates that the mass ratio of component A to component B is a:b. Alternatively, it can indicate that the mass of component A is aK and the mass of component B is bK (wherein K is an arbitrary number representing a scale factor). It should not be misunderstood that, unlike mass percentages, the sum of the parts by mass of all components is not limited to 100 parts.

"And/or" is used to indicate that either or both of the described scenarios can occur. For example, "A and/or B" includes (A and B) as well as (A or B).

A lithium-ion battery positive electrode material precursor, wherein the precursor is composed of primary particles, and a primary particle includes a plurality of neatly stacked single-sheet layers, and the edges of the single-sheet layers are flat.

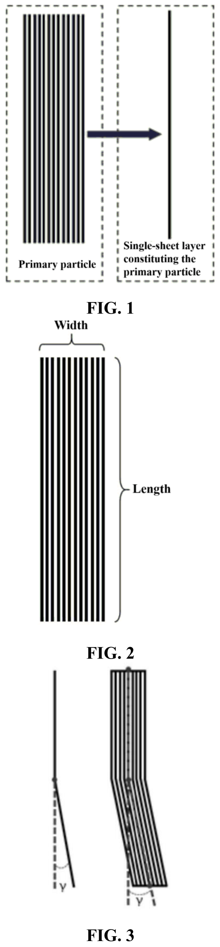

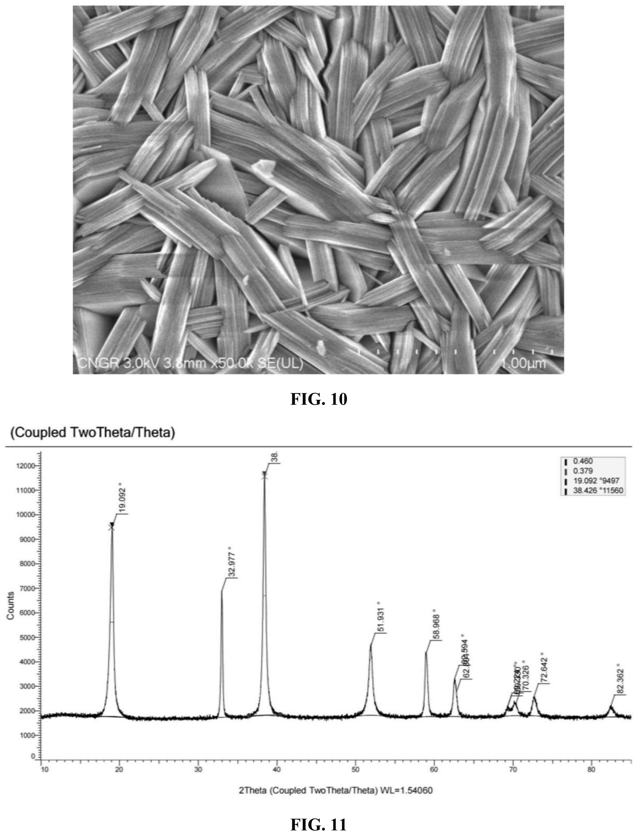

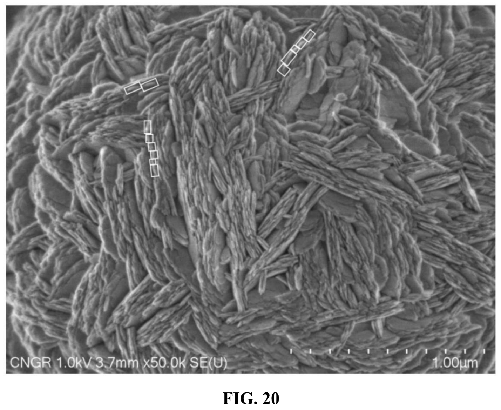

The schematic diagram of the primary particles and the single-sheet layer constituting the primary particles is shown in FIG. 1. It should be noted that each primary particle is formed by stacking N single-sheet layers, wherein N is a positive integer and N≥2. The term "flat edge" in the present disclosure refers to the edges of single-sheet layers being flat without significant concave-convex unevenness. In the partial surface SEM images, the flat edge of the single-sheet layer in the primary particle means that the single-sheet layer is stacked neatly, resulting in the side surface of the primary particle appearing as multiple long, straight, and parallel strips (similar to the stacked state of pages in a book), so that the side surface of the primary particle has no obvious concave-convex unevenness (as shown in FIG. 10). If the single-sheet layers within a primary particle are not neatly stacked, under certain conditions, as shown in FIG. 20, the side surface of the primary particles is uneven, so that a plurality of segmented strips with non-linear arranged can be observed in the partial surface SEM image, which seems to be composed of multiple segments, each fragment constitutes a section of the entire single-sheet layer (as shown in the boxed area in FIG. 20). If the length of a section is relatively short compared to the full single-sheet layer, the single-sheet layer edges are considered uneven. Exemplarily, the magnification for the partial surface SEM images can be 40.0K, 45.0K, 50.0K, 60.0K, etc. The specific magnification needs to sufficient to clearly display the morphology of single-sheet layers in the SEM field of view.

The term "neatly stacked" herein means that each single-sheet layer is stacked together in a parallel or nearly parallel manner, and each single-sheet layer does not shift significantly along one edge in the stacking direction (width direction), similar to the stacking state of pages in a closed book. For example, in the partial surface SEM image with a magnification of 50.0K, the neat stacking of single-sheet layers means that the sizes (length, width and height) of the visible portions of multiple single-sheet layers in a primary particle do not vary significantly, and each single-sheet layer does not shift significantly along one edge in the stacking direction (width direction) after being stacked in layers, similar to the stacking state of pages in a closed book.

The lithium-ion battery positive electrode material precursor provided by the present disclosure is composed of primary particles, and each primary particle includes a plurality of neatly stacked single-sheet layers, and the edges of the single-sheet layers are flat. After the positive electrode material, which inherits the precursor structure, is prepared into a battery, it can inhibit the secondary particles from cracking or breaking after repeated expansion and contraction in the process of charging and discharging, so as to improve the capacity retention after cycling.

In an optional embodiment, in the precursor secondary particle, at least 60% of the primary particles meet the requirement ①: the primary particle length is not less than 200nm, the primary particle width is not less than 50nm, and the length-to-width ratio of the primary particles is not less than 1.2.

Optionally, in the precursor secondary particle, at least 60% of the primary particles meet the requirement ①: the primary particle length is not less than 200nm, not less than 400nm, not less than 600nm, not less than 800nm, not less than 1000nm, not less than 1200nm, not less than 1400nm, not less than 1600nm, not less than 1800nm, not less than 2000nm, not less than 2200nm, not less than 2400nm, not less than 2600nm, not less than 2800nm, not less than 3000nm, not less than 4000nm, not less than 5000nm, not less than 6000nm, or any value not less than 2000nm, and the primary particle width is not less than 50nm, not less than 80nm, not less than 100nm, not less than 120nm, not less than 140nm, not less than 160nm, not less than 180nm, not less than 200nm, not less than 220nm, not less than 240nm, not less than 260nm, not less than 280nm, not less than 300nm, not less than 400nm, not less than 500nm, or any value not less than 50nm.

In an optional embodiment, in the precursor secondary particle, at least 70% of the primary particles meet the requirement ②: the primary particle length is 200nm-3000nm, the primary particle width is 50nm-300nm, and the length-to-width ratio of the primary particles is not less than 1.2.

Optionally, in an optional embodiment, in the precursor secondary particle, at least 70% of the primary particles meet the requirement ②: the primary particle length can be 200nm, 300nm, 400nm, 500nm, 600nm, 700nm, 800nm, 900nm, 1000nm, 1100nm, 1200nm, 1300nm, 1400nm, 1500nm, 1600nm, 1700nm, 1800nm, 1900nm, 2000nm, 2100nm, 2200nm, 2300nm, 2400nm, 2500nm, 2600nm, 2700nm, 2800nm, 2900nm, 3000nm, or any value between 200nm-3000nm, or any range such as 200nm-2000nm, 300nm-1200nm, 600nm-3000nm, 600nm-3000nm, 1500nm-2500nm, etc.; the primary particle width can be 50nm, 60nm, 70nm, 80nm, 90nm, 100nm, 110nm, 120nm, 130nm, 140nm, 150nm, 160nm, 170nm, 180nm, 190nm, 200nm, 210nm, 220nm, 230nm, 240nm, 250nm, 260nm, 270nm, 280nm, 290nm, 300nm, or any value between 50nm-300nm, or any range such as 50nm-100nm, 100nm-200nm, 200nm-300nm, 130nm-290nm, etc., and the length-to-width ratio of the primary particles can be not less than 1.2, not less than 2.0, not less than 3.0, not less than 4.0, not less than 5.0, not less than 6.0, not less than 7.0, not less than 8.0, not less than 9.0, not less than 10.0, not less than 11.0, not less than 12.0, not less than 13.0, not less than 14.0, not less than 15.0, or any range such as 2.0-5.0, 4.0-8.5, 2.5-6.5, 7.5-13.0, 6.0-11.0, etc.

The schematic diagram of the width and length of primary particles is shown in FIG. 2, that is, the width direction is the direction along the stacking direction of single-sheet layers, and the length direction is the direction along the extending direction of single-sheet layers.

In the present disclosure, the length of primary particles refers to the average value of multiple length data measured by selecting multiple primary particles, and the width of primary particles refers to the average value of multiple width data measured by selecting multiple primary particles.

The test method of primary particles is: firstly, adjusting the magnification of scanning electron microscope (SEM) and taking photos to get the partial surface SEM images; then, as shown in FIG. 2, using electronic ruler software Ruler to measure the primary particles selected in the photos respectively to get the length and width of the primary particles, and then calculating the length-width ratio of the primary particles.

The surface partial SEM image refers to the surface partial image of the precursor secondary particles obtained by observing the lithium-ion battery positive electrode material precursor under a Scanning Electron Microscope (SEM) at a specified magnification. Exemplarily, the magnification for the SEM images can be 40.0K, 45.0K, 50.0K, 60.0K, etc. The specific magnification is sufficient to clearly display the morphology of single-sheet layers in the SEM field of view. In the above measurement, if the primary particles are obscured, the unobscured part is assumed to be a complete primary particle for measurement.

In an optional embodiment, in the precursor secondary particle, at least 20% of the primary particles meet the requirement ③:
the single-sheet layers include a fractured single-sheet layer and/or an unfractured single-sheet layer, and the fractured single-sheet layer is in linear shape or kinking shape, and
when the fractured single-sheet layer is in the kinking shape, the minimum included angle γ between the extension line of the linear portion and the kinking portion is less than or equal to 30°.

Optionally, when the fractured single-sheet layer is in the kinking shape, the minimum included angle γ between the extension line of the linear portion and the kinking portion can be less than or equal to 30°, less than or equal to 25°, less than or equal to 20°, less than or equal to 15°, less than or equal to 10°, less than or equal to 5°, etc.

As shown in FIG. 3, the minimum included angle γ is ≤30° between the extension line of the linear portion and the kinking portion of the fractured single-sheet layer in requirement ③.

The related test method is: in the partial surface SEM images, selecting the fractured single-sheet layer in the primary particles, and then, as shown in FIG. 3, using the electronic ruler software Ruler to measure the minimum included angle γ between the extension line of the linear portion and the kinking portion of the fractured single-sheet layer.

In an optional embodiment, in the precursor secondary particle, at least 20% of the primary particles meet at least one of the following requirements.

Requirement ④: in the primary particle, the single-sheet layers include a fractured single-sheet layer and/or an unfractured single-sheet layer, and the fracture count of each fractured single-sheet layer is less than or equal to 2.

Requirement ⑤: in the primary particle, the single-sheet layers include a fractured single-sheet layer and/or an unfractured single-sheet layer, and the length of the longest fragment in each fractured single-sheet layer accounts for not less than 50% of the total length of the single-sheet layer in which it is located.

Optionally, in the of the primary particles, the single-sheet layers include a fractured single-sheet layer and/or an unfractured single-sheet layer, and the length of the longest fragment in each fractured single-sheet layer accounts for the total length of the single-sheet layer in which it is located is not less than 50%, not less than 55%, not less than 60%, not less than 65%, not less than 70%, not less than 75%, not less than 80%, not less than 85%, not less than 90%, etc.

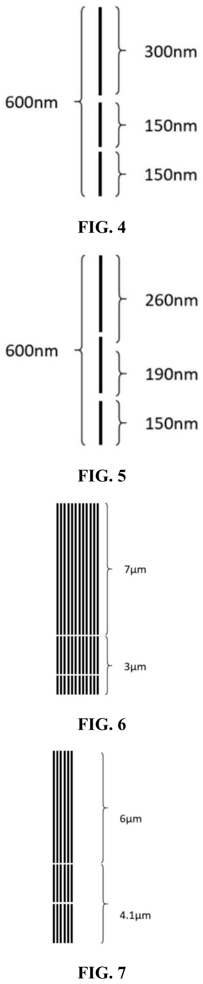

Exemplarily, as shown in FIG. 4 and FIG. 5, FIG. 4 is a schematic diagram of a fractured single-sheet layer that meets the requirement ⑤, and FIG. 5 is a schematic diagram of a fractured single-sheet layer that does not meet the requirement ⑤.

Requirement ⑥: in the primary particle, the single-sheet layers include fractured single-sheet layers and/or unfractured single-sheet layers, the sum of the total length of all unfractured single-sheet layers and the total length of the longest fragments from all fractured single-sheet layers accounts for not less than 60% of the total length of all single-sheet layers.

Exemplarily, as shown in FIG. 6 and FIG. 7, assuming that the lengths of all single-sheet layers in the same primary particle are the same, and the fracture positions in the fractured single-sheet layers are the same, the total length of the longest fragment in all fractured single-sheet layers shown in FIG. 6 accounts for 70% of the total length of all single-sheet layers in the primary particle to which it belongs, meeting the requirement ⑥, and
the total length of the longest fragment in all fractured single-sheet layers shown in FIG. 7 accounts for 59.4% of the total length of all single-sheet layers in the primary particle to which it belongs, which does not meet the requirement ⑥.

The related test method is: in the partial surface SEM images, selecting fractured single-sheet layers within primary particles, firstly, observing the fracture count of the single-sheet layer, then measuring the length of each fragment in the fractured single-sheet layer by using electronic ruler software Ruler, as shown in FIG. 5, and then calculating the ratio of the length of the longest fragment in each fractured single-sheet layer to the total length of the single-sheet layer where it is located; finally, referring to FIG. 6 and FIG. 7, calculating the ratio of the total length of the longest fragment from all fractured single-sheet layers to the total length of all single-sheet layers in the primary particle. In the above measurement, if the single-sheet layer is obscured, the unobscured part is assumed to be a complete single-sheet layer for measurement.

The lithium-ion battery positive electrode material precursor provided by the present disclosure is composed of primary particles, and each primary particle includes a plurality of neatly stacked single-sheet layers, and the edges of the single-sheet layers are flat. The multiple single-sheet layers constituting the primary particles exhibit the characteristics of high regularity and high integrity, indicating the narrow full widths at half maximum for the (001) facet and

(101) facet, thus indicating the high crystallinity and fewer crystal defects. These characteristics can effectively reduce the side reactions when the battery is used and inhibit the damage of the secondary particle structure during the repeated charging and discharging process, so as to improve the capacity retention after cycling.

The high regularity of single-sheet layers means that the shapes and sizes of multiple single-sheet layers in a primary particle are consistent, and their edges are flat and the single-sheet layers are neatly stacked. The high integrity of single-sheet layers means that there are few fractured single-sheet layers in the the primary particle, and the fracture count of fractured single-sheet layers are small, and long fragments account for a large proportion; the kinking deformation of the fractured single-sheet layer is small, and the minimum included angle γ between the extension line of the linear portion and the kinking portion is small.

In an optional embodiment, the lithium-ion battery positive electrode material precursor meets at least one of the following conditions.
A. The particle size D50 of the precursor is 4µm-20µm.

Optionally, the particle size D50 of the precursor can be 4µm, 5µm, 6µm, 7µm, 8µm, 9µm, 10µm, 11µm, 12µm, 13µm, 14µm, 15µm, 16µm, 17µm, 18µm, 19µm, 20µm, or any value between 4µm-20µm, or any range such as 4µm-8µm, 8µm-20µm, 8µm-15µm, 12µm-20µm, 5µm-10µm, etc.

B. A full width at half maximum FWHM (001) of the precursor with (001) facet corresponding to the diffraction angle 20 = 19.2±1° and a full width at half maximum FWHM (101) of the precursor with (101) facet corresponding to the diffraction angle 2θ = 38.5±1° are both less than 0.550°.

Optionally, the full width at half maximum FWHM (001) of the precursor with (001) facet corresponding to the diffraction angle 20 = 19.2±1° and the full width at half maximum FWHM (101) of the precursor with (101) facet corresponding to the diffraction angle 20 = 38.5±1° can be both less than 0.550°, both less than 0.500°, both less than 0.450°, both less than 0.400°, both less than 0.350°, both less than 0.300°, both less than 0.250°, both less than 0.200°, both less than 0.150°, etc.

C. The specific surface area BET of the precursor is 3m²/g-20m²/g.

Optionally, the specific surface area BET of the precursor can be 3m²/g, 4m²/g, 5m²/g, 6m²/g, 7m²/g, 8m²/g, 9m²/g, 10m²/g, 11m²/g, 12m²/g, 13m²/g, 14m²/g, 15m²/g, 16m²/g, 17m²/g, 18m²/g, 19m²/g, 20m²/g, 21m²/g, 22m²/g, 23m²/g, 24m²/g, 25m²/g, 26m²/g, 27m²/g, 28m²/g, 29m²/g, 30m²/g, or any value between 3m²/g-20m²/g, or any range such as 3m²/g-8m²/g, 8m²/g-17m²/g, 15m²/g-20m²/g, 5m²/g-10m²/g, 6m²/g-16m²/g, etc.

D. The general chemical formula of the precursor is NiₓM₁₋ₓ(OH)₂, where 0.6 ≤ x < 1, and M is at least one of Co, Mn, Al, Fe, Ti, Zr, Mo, Cr, W, B, Mg, Ba, Nb and Sr.

Optionally, the x in the general chemical formula of the precursor can be 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, or any value between 0.6≤x<1, or any range such as 0.6≤x<0.8, 0.8≤x<1, 0.75≤x≤0.95, 0.9≤x<1, 0.95≤x<1, etc.

E. The chemical formula of the precursor is NiₓCo_{y}Mn_{z}M¹_{1-x-y-z}(OH)₂, where 0.6 ≤ x < 1, 0≤y≤0.4, 0≤z≤0.4, and 1-x-y ≥ 0; M¹ is at least one of Al, Fe, Ti, Zr, Mo, Cr, W, B, Mg, Ba, Nb and Sr.

Optionally, the y in the general chemical formula of the precursor can be 0, 0.005, 0.01, 0.015, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.4, or any value between 0≤y≤0.4, or any range such as 0≤y≤0.05, 0≤y≤0.2, 0≤y≤0.3, 0<y<0.4, 0≤y≤0.1, 0.1≤y≤0.3, 0.2≤y≤0.4, etc. The z can be 0, 0.005, 0.01, 0.015, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.4, or any value between 0≤y≤0.4, or any range such as 0≤z≤0.05, 0≤z≤0.2, 0≤z≤0.3, 0<z<0.4, 0≤z≤0.1, 0.1≤z≤0.3, 0.2≤z≤0.4, etc. The 1-x-y can be 0, 0.005, 0.01, 0.015, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.4, or any value between 1-x-y≥0, or any range such as 0≤1-x-y≤0.05, 0≤1-x-y≤0.2, 0≤1-x-y≤0.3, 0<1-x-y<0.4, 0≤1-x-y≤0.1, 0.1≤1-x-y≤0.3, 0.2≤1-x-y≤0.4, etc.

A preparation method for the lithium-ion battery positive electrode material precursor is further provided in the present disclosure, including:
introducing raw materials including a nickel-containing metal salt solution, a precipitant and a complexing agent into a base solution for reaction, and during the reaction, controlling the pH value to be 9.8-11.3, the ammonia concentration to be 2g/L-12g/L, and the concentration of nickel in a supernatant to be 70ppm-350ppm; and after the reaction, carrying out solid-liquid separation, drying, sieving and demagnetizing to obtain the lithium-ion battery positive electrode material precursor.

Optionally, during the reaction process, the pH can be controlled at 9.8, 9.9, 10.0, 10.1, 10.2, 10.3, 10.4, 10.5, 10.6, 10.7, 10.8, 10.9, 11.0, 11.1, 11.2, 11.3, or any value between 9.8-11.3, or any range such as 9.8-10.4, 10.4-11.0, 11.0-11.3, 11.00-11.20, etc. The ammonia concentration can be 2g/L, 3g/L, 4g/L, 5g/L, 6g/L, 7g/L, 8g/L, 9g/L, 10g/L, 11g/L, 12g/L, or any value between 2g/L-12g/L, or any range such as 2g/L-8g/L, 3g/L-7g/L, 8g/L-12g/L, 4g/L-10g/L, 5g/L-12g/L, etc. The concentration of nickel in a supernatant can be 70ppm, 80ppm, 90ppm, 100ppm, 110ppm, 120ppm, 130ppm, 140ppm, 150ppm, 160ppm, 170ppm, 180ppm, 190ppm, 210ppm, 220ppm, 230ppm, 240ppm, 250ppm, 260ppm, 270ppm, 280ppm, 290ppm, 300ppm, 310ppm, 320ppm, 330ppm, 340ppm, 350ppm, or any value between 70ppm-350ppm, or any range such as 70ppm-250ppm, 250ppm-350ppm, 70ppm-150ppm, 150ppm-300ppm, 200ppm-350ppm, 100ppm-300ppm, etc.

In an optional embodiment, the above preparation method satisfies at least one of the following conditions.
a. The nickel-containing metal in the nickel-containing metal salt solution contains Ni, and at least one of Co and Mn.
b. The nickel-containing metal in the nickel-containing metal salt solution only contains Ni.
c. The raw material introduced into the base solution further includes a doping metal salt solution, wherein the doping metal in the doping metal salt solution includes at least one of Al, Fe, Ti, Zr, Mo, Cr, W, B, Mg, Ba, Nb and Sr.

It should be noted that the doping metal salt can be used together with the nickel-containing metal salt to prepare a mixed solution, or it can be separately prepared into a doping metal salt solution and then flows into the reaction vessel together with the nickel-containing metal salt solution. The expression of the present disclosure herein cannot only be understood as "the doping metal salt must be prepared and used separately from the nickel-containing metal salt".
d. The precipitant includes sodium hydroxide solution, and the complexing agent includes ammonia solution.
e. The flow rate of the nickel-containing metal salt solution is 2%/h-10%/h of the available volume of the reaction vessel, the flow rate of the precipitant is 0.5%/h-3.5%/h of the available volume of the reaction vessel, and the flow rate of the complexing agent is 0.01%/h-1%/h of the available volume of the reaction vessel.

Optionally, the flow rate of the nickel-containing metal salt solution can be, 2%/h, 3%/h, 4%/h, 5%/h, 6%/h, 7%/h, 8%/h, 9%/h, 10%/h, or any value between 2%/h-10%/h, or any range such as 2%/h-8%/h, 4%/h-10%/h, 6%/h-10%/h, 3%/h-7%/h, 5%/h-9%/h, etc., of the available volume of the reaction vessel. The flow rate of the precipitant can be, 0.5%/h, 1.0%/h, 1.5%/h, 2.0%/h, 2.5%/h, 3.0%/h, 3.5%/h, or any value between 0.5%/h-3.5%/h, or any range such as 0.5%/h-1.5%/h, 1.5%/h-2.5%/h, 2.5%/h-3.5%/h, 1.0%/h-2.5%/h, 1.5%/h-3.0%/h, 0.8%/h-1.5%/h, 0.9%/h-1.4%/h, 1.4%/h-1.5%/h, etc., of the available volume of the reaction vessel. The flow rate of the complexing agent can be, 0.01%/h, 0.05%/h, 0.1%/h, 0.2%/h, 0.3%/h, 0.4%/h, 0.5%/h, 0.6%/h, 0.7%/h, 0.8%/h, 0.9%/h, 1%/h, or any value between 0.01%/h-1%/h, or any range such as 0.08%/h-0.16%/h, 0.01%/h-0.3%/h, 0.3%/h-0.6%/h, 0.6%/h-1%/h, 0.05%/h-0.20%/h, 0.2%/h-0.7%/h, 0.3%/h-0.8%/h, etc., of the available volume of the reaction vessel.
f. The base solution includes sodium hydroxide solution, ammonia solution and water.
g. The pH of the base solution is 10.5-12.3, and the ammonia concentration of the base solution is 3.4g/L-6g/L; optionally, the pH of the base solution is 10.5-11.90.

Optionally, the pH of the base solution can be 10.5, 10.6, 10.7, 10.8, 10.9, 11.0, 11.1, 11.2, 11.3, 11.4, 11.5, 11.6, 11.7, 11.8, 11.9, 12.0, 12.1, 12.1, 12.2, 12.3, or any value between 10.5-12.3, or any range such as 10.5-11.8, 11.8-12.3, 11.0-12.0, 10.8-11.8, etc. The ammonia concentration of the base solution can be 3.4g/L, 3.5g/L, 3.6g/L, 3.7g/L, 3.8g/L, 3.9g/L, 4.0g/L, 4.5g/L, 5g/L, 5.5g/L, 6.0g/L, or any value between 3.4g/L-6g/L, or any range such as 3.4g/L-4.5g/L, 4.5g/L-6.0g/L, 4.0g/L-5.0g/L, etc.

h. The mother liquor is discharged during the reaction process, and the total liquid feeding rate equals the sum of the flow rates of feeding the raw materials into the base solution simultaneously, and the discharge rate of the mother liquor is consistent with the total liquid feeding rate.

A lithium-ion battery positive electrode material is further provided in the present disclosure, wherein the raw material of it includes the lithium-ion battery positive electrode material precursor.

A lithium-ion battery is further provided in the present disclosure, including the lithium-ion battery positive electrode material.

An electrically related equipment is further provided in the present disclosure, including the lithium-ion battery.

The electrically related equipment referred to in the present disclosure includes, for example, electric vehicles, electric bicycles, mobile phones, tablet computers, portable chargers, energy storage stations and other devices that directly or indirectly use lithium-ion batteries.

Embodiments of the present disclosure will be described in detail below with reference to specific examples, but those skilled in the art will understand that the following examples are only used to illustrate the present disclosure and should not be regarded as limiting the scope of the present disclosure. Where specific conditions are not specified in the examples, it shall be carried out according to the conventional conditions or the conditions suggested by the manufacturer. The reagents or instruments used without indicating the manufacturer are conventional products that can be obtained through commercially available purchase.

First of all, it should be noted that the primary particles with high regularity and integrity represent the high crystallinity of the material, and the corresponding XRD full width at half maximum is obviously narrower than that of the same type of products. At the same time, due to the reduction of the gaps between multiple single-sheet layers in the primary particles, the material exhibits lower BET when the cross-sectional structure has the same porosity, indicating that the crystal defects are reduced, so as to reduce the side reactions during circulation.

### Example 1 (Ternary Precursor: Ni_{0.95}Co_{0.04}Mn_{0.01}(OH)₂)

A lithium-ion battery positive electrode material precursor was provided in the present example, wherein the preparation method was as follows.

### Step 1: Solution Preparation

According to the molar ratio of nickel, cobalt and manganese of 95:4:1, nickel sulfate, cobalt sulfate and manganese sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 65°C, so as to obtain a base solution with a pH of 11.75 and an ammonia concentration of 4g/L.

### Step 3: Material Preparation

Under stirring, a constant temperature of 65°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted within a range of 10.4-10.7 and the ammonia concentration was maintained within a range of 3g/L-7g/L by fine-tuning the flow rates of the NaOH solution and ammonia solution within 4h of feeding. The nickel concentration in the supernatant was controlled and maintained within a range of 170ppm-230ppm. Finally, a metal hydroxide reaction precipitate slurry with a diameter D50 of 14µm was obtained. The reaction precipitate slurry was washed, centrifuged, dried, sieved, and demagnetized, so as to obtain the ternary positive electrode material precursor Ni_{0.95}Co_{0.04}Mn_{0.01}(OH)₂ for lithium-ion battery.

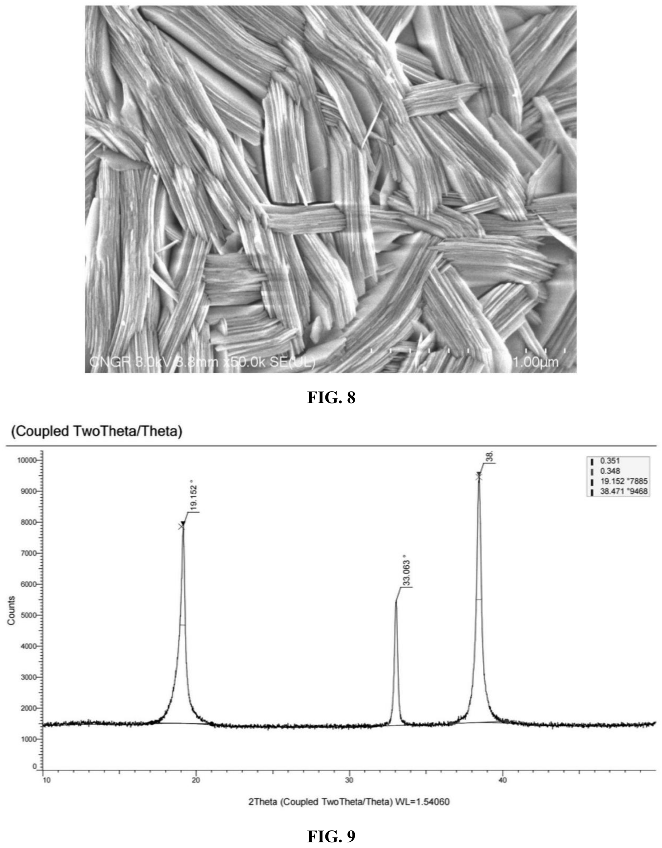

The partial surface SEM image of the secondary particles of the obtained ternary positive electrode material precursor Ni_{0.95}Co_{0.04}Mn_{0.01}(OH)₂ for lithium-ion battery is shown in FIG. 8, and its XRD spectrum is shown in FIG. 9.

### Example 2 (Ternary Precursor: Ni_{0.95}Co_{0.04}Mn_{0.01}(OH)₂)

A lithium-ion battery positive electrode material precursor was provided in the present example, wherein the preparation method was as follows.

### Step 1: Solution Preparation

According to the molar ratio of nickel, cobalt and manganese of 95:4:1, nickel sulfate, cobalt sulfate and manganese sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 60°C, so as to obtain a base solution with a pH of 11.85 and an ammonia concentration within 5g/L.

### Step 3: Material Preparation

Under stirring, a constant temperature of 60°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 10.20-10.70 and the ammonia concentration was maintained within a range of 3g/L-7g/L by fine-tuning the flow rates of the NaOH solution and ammonia solution within 4h of feeding. The nickel concentration in the supernatant was controlled and maintained within a range of 250ppm-330ppm. Finally, a metal hydroxide reaction precipitate slurry with a diameter D50 of 14µm was obtained.

The reaction precipitate slurry was washed, centrifuged, dried, sieved, and demagnetized, so as to obtain the ternary positive electrode material precursor Ni_{0.95}Co_{0.04}Mn_{0.01}(OH)₂ for lithium-ion battery.

The partial surface SEM image of the secondary particles of the obtained ternary positive electrode material precursor Ni_{0.95}Co_{0.04}Mn_{0.01}(OH)₂ for lithium-ion battery is shown in FIG. 10, and its XRD spectrum is shown in FIG. 11.

### Example 3 (Ternary Precursor: Ni_{0.95}Co_{0.04}Mn_{0.01}(OH)₂)

A lithium-ion battery positive electrode material precursor was provided in the present example, wherein the preparation method was as follows.

### Step 1: Solution Preparation

According to the molar ratio of nickel, cobalt and manganese of 95:4:1, nickel sulfate, cobalt sulfate and manganese sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 55°C, so as to obtain a base solution with a pH of 11.60 and an ammonia concentration of 6g/L.

### Step 3: Material Preparation

Under stirring, a constant temperature of 55°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 11.00-11.20 and the ammonia concentration was maintained within a range of 3g/L-7g/L by fine-tuning the flow rates of the NaOH solution and ammonia solution within 4h of feeding. The nickel concentration in the supernatant was controlled and maintained within a range of 80ppm-150ppm. Finally, a metal hydroxide reaction precipitate slurry with a diameter D50 of 14µm was obtained. The reaction precipitate slurry was washed, centrifuged, dried, sieved, and demagnetized, so as to obtain the ternary positive electrode material precursor Ni_{0.95}Co_{0.04}Mn_{0.01}(OH)₂ for lithium-ion battery.

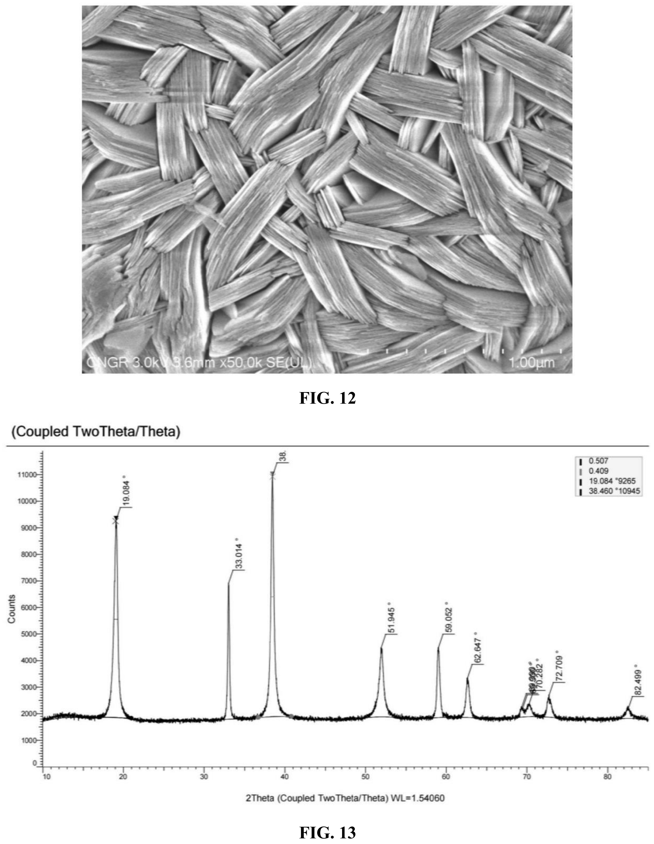

The partial surface SEM image of the secondary particles of the obtained ternary positive electrode material precursor Ni_{0.95}Co_{0.04}Mn_{0.01}(OH)₂ for lithium-ion battery is shown in FIG. 12, and its XRD spectrum is shown in FIG. 13.

### Example 4 (Binary Precursor: Ni_{0.95}Mn_{0.05}(OH)₂)

A lithium-ion battery positive electrode material precursor was provided in the present example, wherein the preparation method was as follows.

### Step 1: Solution Preparation

According to the molar ratio of nickel and manganese of 95:5, nickel sulfate and manganese sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 60°C, so as to obtain a base solution with a pH of 11.90 and an ammonia concentration of 6g/L.

### Step 3: Material Preparation

Under stirring, a constant temperature of 60°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 11.00-11.20 and the ammonia concentration was maintained within a range of 3g/L-7g/L by fine-tuning the flow rates of the NaOH solution and ammonia solution within 4h of feeding. The nickel concentration in the supernatant was controlled and maintained within a range of 80ppm-150ppm. Finally, a metal hydroxide reaction precipitate slurry with a diameter D50 of 14µm was obtained. The reaction precipitate slurry was washed, centrifuged, dried, sieved, and demagnetized, so as to obtain the binary positive electrode material precursor Ni_{0.95}Mn_{0.05}(OH)₂ for lithium-ion battery.

### Example 5 (Ternary Precursor: Ni_{0.7}Co_{0.1}Mn_{0.2}(OH)₂)

A lithium-ion battery positive electrode material precursor was provided in the present example, wherein the preparation method was as follows.

### Step 1: Solution Preparation

According to the molar ratio of nickel, cobalt and manganese of 70:10:20, nickel sulfate, cobalt sulfate and manganese sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 50°C, so as to obtain a base solution with a pH of 11.40 and an ammonia concentration of 3.4g/L.

### Step 3: Material Preparation

Under stirring, a constant temperature of 50°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 11.00-11.20 and the ammonia concentration was maintained within a range of 3g/L-7g/L by fine-tuning the flow rates of the NaOH solution and ammonia solution within 4h of feeding. The nickel concentration in the supernatant was controlled and maintained within a range of 70ppm-100ppm. Finally, a metal hydroxide reaction precipitate slurry with a diameter D50 of 10µm was obtained. The reaction precipitate slurry was washed, centrifuged, dried, sieved, and demagnetized, so as to obtain the ternary positive electrode material precursor Ni_{0.7}Co_{0.1}Mn_{0.2}(OH)₂ for lithium-ion battery.

### Example 6 (Quaternary Precursor: Ni_{0.05}Co_{0.03}Mn_{0.015}Al_{0.005}(OH)₂)

A lithium-ion battery positive electrode material precursor was provided in the present example, wherein the preparation method was as follows.

### Step 1: Solution Preparation

According to the molar ratio of nickel, cobalt, manganese, and aluminum of 95:3:1.5:0.5, nickel sulfate, cobalt sulfate, manganese sulfate, and aluminum sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 65°C, so as to obtain a base solution with a pH of 11.40 and an ammonia concentration of 3.4g/L.

### Step 3: Material Preparation

Under stirring, a constant temperature of 65°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 11.00-11.20 and the ammonia concentration was maintained within a range of 3g/L-7g/L by fine-tuning the flow rates of the NaOH solution and ammonia solution within 4h of feeding. The nickel concentration in the supernatant was controlled and maintained within a range of 100ppm-150ppm. Finally, a metal hydroxide reaction precipitate slurry with a diameter D50 of 14µm was obtained. The reaction precipitate slurry was washed, centrifuged, dried, sieved, and demagnetized, so as to obtain the quaternary positive electrode material precursor Ni_{0.95}Co_{0.03}Mn_{0.015}Al_{0.005}(OH)₂ for lithium-ion battery.

### Example 7 (Quaternary Precursor: Ni_{0.95}Co_{0.03}Mn_{0.015}Zr_{0.005}(OH)₂)

A lithium-ion battery positive electrode material precursor was provided in the present example, wherein the preparation method was as follows.

### Step 1: Solution Preparation

According to the molar ratio of nickel, cobalt, manganese, and zirconium of 95:3:1.5:0.5, nickel sulfate, cobalt sulfate, manganese sulfate, and zirconium sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 55°C, so as to obtain a base solution with a pH of 11.40 and an ammonia concentration of 3.4g/L.

### Step 3: Material Preparation

Under stirring, a constant temperature of 55°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 11.00-11.20 and the ammonia concentration was maintained within a range of 3g/L-7g/L by fine-tuning the flow rates of the NaOH solution and ammonia solution within 4h of feeding. The nickel concentration in the supernatant was controlled and maintained within a range of 250ppm-300ppm. Finally, a metal hydroxide reaction precipitate slurry with a diameter D50 of 14µm was obtained. The reaction precipitate slurry was washed, centrifuged, dried, sieved, and demagnetized, so as to obtain the quaternary positive electrode material precursor Ni_{0.95}Co_{0.03}Mn_{0.015}Zr_{0.005}(OH)₂ for lithium-ion battery.

### Example 8 (Ternary Precursor: Ni_{0.95}Co_{0.04}Mn_{0.01}(OH)₂)

### Step 1: Solution Preparation

According to the molar ratio of nickel, cobalt and manganese of 95:4:1, nickel sulfate, cobalt sulfate and manganese sulfate were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 55°C, so as to obtain a base solution with a pH of 11.00 and an ammonia concentration of 3.4g/L.

### Step 3: Material Preparation

Under stirring, a constant temperature of 65°C, and nitrogen protection, the nickel-containing metal salt solution (flow rate: 3%/h of the available volume of the reaction vessel), NaOH solution (flow rate: 1.05%/h-1.15%/h of the available volume of the reaction vessel), and ammonia solution (flow rate: 0.06%/h-0.12%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 10.30-10.50 and the ammonia concentration was maintained within a range of 3g/L-7g/L by fine-tuning the flow rates of the NaOH solution and ammonia solution within 4h of feeding. The nickel concentration in the supernatant was controlled and maintained within a range of 100ppm-150ppm. Finally, a metal hydroxide reaction precipitate slurry with a diameter D50 of 4µm was obtained. The reaction precipitate slurry was washed, centrifuged, dried, sieved, and demagnetized, so as to obtain the ternary positive electrode material precursor Ni_{0.95}Co_{0.04}Mn_{0.01}(OH)₂ for lithium-ion battery.

### Example 9 (Ternary Precursor: Ni_{0.83}Co_{0.11}Mn_{0.06}(OH)₂)

### Step 1: Solution Preparation

According to the molar ratio of nickel, cobalt and manganese of 83:11:6, nickel sulfate, cobalt sulfate and manganese sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 60°C, so as to obtain a base solution with a pH of 11.30 and an ammonia concentration of 3.0g/L.

### Step 3: Material Preparation

Under stirring, a constant temperature of 60°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 10.50-10.70 and the ammonia concentration was maintained within a range of 3g/L-7g/L by fine-tuning the flow rates of the NaOH solution and ammonia solution within 4h of feeding. The nickel concentration in the supernatant was controlled and maintained within a range of 150ppm-250ppm. Finally, a metal hydroxide reaction precipitate slurry with a diameter D50 of 8µm was obtained. The reaction precipitate slurry was washed, centrifuged, dried, sieved, and demagnetized, so as to obtain the ternary positive electrode material precursor Ni_{0.83}Co_{0.11}Mn_{0.06}(OH)₂ for lithium-ion battery.

### Comparative Example 1 (Ternary Precursor: Ni_{0.95}Co_{0.04}Mn_{0.01}(OH)₂)

A lithium-ion battery positive electrode material precursor was provided in the present comparative example, wherein the preparation method was as follows.

### Step 1: Solution Preparation

According to the molar ratio of nickel, cobalt and manganese of 95:4:1, nickel sulfate, cobalt sulfate and manganese sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 65°C, so as to obtain a base solution with a pH of 12.25 and an ammonia concentration of 6g/L.

### Step 3: Material Preparation

Under stirring, a constant temperature of 65°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 11.60-11.80 and the ammonia concentration was maintained within a range of 5g/L-8g/L by fine-tuning the flow rates of the NaOH solution and ammonia solution within 4h of feeding. The nickel concentration in the supernatant was controlled and maintained within a range of ≤10ppm. Finally, a metal hydroxide reaction precipitate slurry with a diameter D50 of 14µm was obtained. The reaction precipitate slurry was washed, centrifuged, dried, sieved, and demagnetized, so as to obtain the ternary positive electrode material precursor Ni_{0.95}Co_{0.04}Mn_{0.01}(OH)₂ for lithium-ion battery.

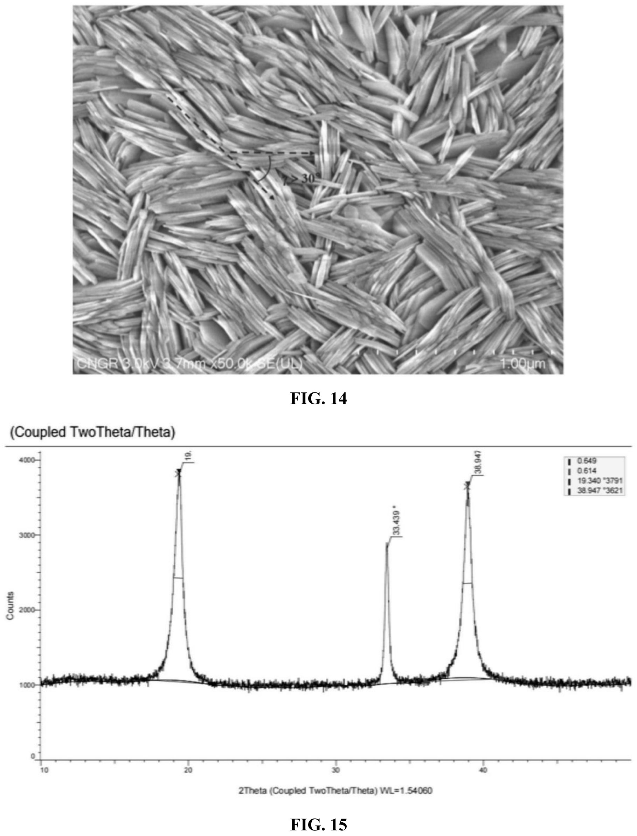

The partial surface SEM image of the secondary particles of the obtained ternary positive electrode material precursor Ni_{0.95}Co_{0.04}Mn_{0.01}(OH)₂ for lithium-ion battery is shown in FIG. 14, and its XRD spectrum is shown in FIG. 15.

### Comparative Example 2 (Ternary Precursor: Ni_{0.95}Co_{0.04}Mn_{0.01}(OH)₂)

A lithium-ion battery positive electrode material precursor was provided in the present comparative example, wherein the preparation method was as follows.

### Step 1: Solution Preparation

According to the molar ratio of nickel, cobalt and manganese of 95:4:1, nickel sulfate, cobalt sulfate and manganese sulfate crystals were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 65°C, so as to obtain a base solution with a pH of 12.15 and an ammonia concentration fluctuating around 5g/L.

### Step 3: Material Preparation

Under stirring, a constant temperature of 65°C, and nitrogen protection, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 9.30-9.50 and the ammonia concentration was maintained within a range of 5g/L-8g/L by fine-tuning the flow rates of the NaOH solution and ammonia solution within 4h of feeding. The nickel concentration in the supernatant was controlled and maintained within a range of 400ppm-500ppm. Finally, a metal hydroxide reaction precipitate slurry with a diameter D50 of 14µm was obtained. The reaction precipitate slurry was washed, centrifuged, dried, sieved, and demagnetized, so as to obtain the ternary positive electrode material precursor Ni_{0.95}Co_{0.04}Mn_{0.01}(OH)₂ for lithium-ion battery.

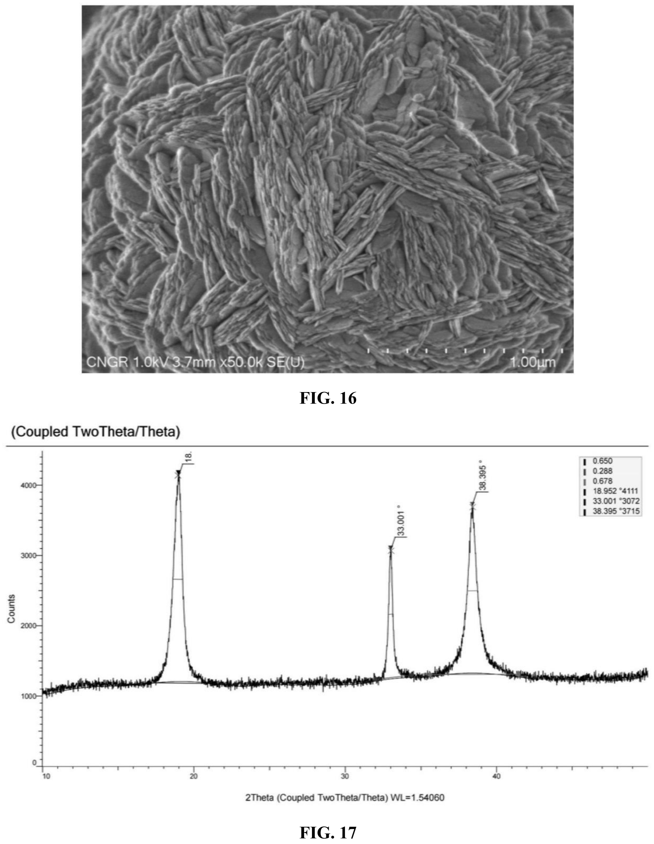

The partial surface SEM image of the secondary particles of the obtained ternary positive electrode material precursor Ni_{0.95}Co_{0.04}Mn_{0.01}(OH)₂ for lithium-ion battery is shown in FIG. 16, and its XRD spectrum is shown in FIG. 17.

### Comparative Example 3 (Ternary Precursor: Ni_{0.95}Co_{0.04}Mn_{0.01}(OH)₂)

A lithium-ion battery positive electrode material precursor was provided in the present comparative example, wherein the preparation method was as follows.

### Step 1: Solution Preparation

According to the molar ratio of nickel, cobalt and manganese of 95:4:1, nickel sulfate, cobalt sulfate and manganese sulfate were calculated and weighed to prepare a nickel-containing metal salt solution with a total metal content of 2mol/L.

### Step 2: Base Solution Preparation

Pure water, a NaOH solution (concentration of 32wt%), and an ammonia solution (concentration of 21wt%) were added into a reaction vessel. The mixture was stirred uniformly at a constant temperature of 35°C, so as to obtain a base solution with a pH of 10.80 and an ammonia concentration of 3.4g/L.

### Step 3: Material Preparation

Under stirring, a constant temperature of 35°C, and air environment, the nickel-containing metal salt solution (flow rate: 4%/h of the available volume of the reaction vessel), NaOH solution (flow rate: 1.4%/h-1.5%/h of the available volume of the reaction vessel), and ammonia solution (flow rate: 0.08%/h-0.16%/h of the available volume of the reaction vessel) were simultaneously fed into the reaction vessel containing the base solution. During the reaction, the mother liquor was discharged by a concentration device, and the discharge rate of the mother liquor is consistent with the total liquid feeding rate.

During the reaction, the pH was adjusted to a range of 9.30-9.50 and the ammonia concentration was maintained within a range of 5g/L-8g/L by fine-tuning the flow rates of the NaOH solution and ammonia solution within 4h of feeding. The nickel concentration in the supernatant was controlled and maintained within a range of 400ppm-500ppm. Finally, a metal hydroxide reaction precipitate slurry with a diameter D50 of 4µm was obtained. The reaction precipitate slurry was washed, centrifuged, dried, sieved, and demagnetized, so as to obtain the ternary positive electrode material precursor Ni_{0.95}Co_{0.04}Mn_{0.01}(OH)₂ for lithium-ion battery. The measurement data and related parameters obtained from the partial SEM image of the precursor secondary particle in Examples 1-9 and Comparative Examples 1-3 are shown in Tables 1, 2, and 3 below.

**Table 1 Parameters of the primary particles of preferred at least 60% in the precursor**

| Item | Edge of single-sheet layer | Stacking state of single-sheet layer | Primary particle length (nm) | Primary particle width (nm) | Length-to-width ratio of primary particle | Percentage of primary particles meeting requirement ② to the total quantity |
|---|---|---|---|---|---|---|
| Example 1 | Flat | Neat | 450-1580 | 100-200 | 4.3-7.9 | 83% |
| Example 2 | Flat | Neat | 750-1200 | 160-300 | 2.8-5.8 | 87% |
| Example 3 | Flat | Neat | 410-750 | 100-200 | 3.6-4.4 | 78% |
| Example 4 | Flat | Neat | 800-1000 | 50-100 | 8.0-12.5 | 81% |
| Example 5 | Flat | Neat | 800-1300 | 120-220 | 6.6-10.8 | 85% |
| Example 6 | Flat | Neat | 650-800 | 50-80 | 8.1-11.4 | 77% |
| Example 7 | Flat | Neat | 400-640 | 140-280 | 2.2-4.2 | 71% |
| Example 8 | Flat | Neat | 300-450 | 100-150 | 2.0-4.5 | 82% |
| Example 9 | Flat | Neat | 500-750 | 160-250 | 2.0-4.7 | 86% |
| Comparative Example 1 | Uneven | Staggered | 410-580 | 100-200 | 7.2-2.1 | 45% |
| Comparative Example 2 | Uneven | Staggered | 500-660 | 100-150 | 3.3-6.6 | 29% |
| Comparative Example 3 | Uneven | Staggered | 45-200 | 10-40 | 4.0-12.0 | 0% |
| Note: From the partial SEM images of various surfaces, 10 primary particles were selected for observation, measurement, and calculation to obtain the aforementioned parameters. The length-to-width ratio measurement and calculation method for primary particles was as follows: first, the length-to-width ratio of each preferable primary particle was calculated individually, then the range of length-to-width ratios was determined. | | | | | | |

**Table 2. Fracture parameters of the primary particles of preferred at least 20% in the precursor**

| Item | γ in Requirement ③ | Fracture count in Requirement ④ | Length ratio in Requirement ⑤ | Length ratio in Requirement ⑥ |
|---|---|---|---|---|
| Example 1 | ≤30° | ≤2 | ≥50% | ≥60% |
| Example 2 | ≤30° | ≤2 | ≥50% | ≥60% |
| Example 3 | ≤30° | ≤2 | ≥50% | ≥60% |
| Example 4 | ≤30° | ≤2 | ≥50% | ≥60% |
| Example 5 | ≤30° | ≤2 | ≥50% | ≥60% |
| Example 6 | ≤30° | ≤2 | ≥50% | ≥60% |
| Example 7 | ≤30° | ≤2 | ≥50% | ≥60% |
| Example 8 | ≤30° | ≤2 | ≥50% | ≥60% |
| Example 9 | ≤30° | ≤2 | ≥50% | ≥60% |
| Comparative Example 1 | >30° | >2 | <50% | <60% |
| Comparative Example 2 | ≤30° | >2 | <50% | <60% |
| Comparative Example 3 | ≤30° | ≤2 | ≥50% | ≥60% |
| Note: | | | | |
| 1. From each SEM image, 5 primary particles were preferentially selected for measurement and calculation. | | | | |
| 2. The method for determining γ -angle was: if any single primary particle among the preferentially selected primary particles failed to meet the requirement of γ in Requirement ③, it was recorded as γ > 30°; conversely, if all met the requirement of γ in Requirement ③, it was recorded as γ ≤ 30°. | | | | |
| 3. The method for determining the fracture count in Requirement ④ was: if any fractured single-sheet layer among the preferentially selected primary particles failed to meet the fracture count requirement in Requirement ④, it was recorded as the fracture count > 2; conversely, if all met the fracture count requirement in Requirement ④, it was recorded as the fracture count ≤ 2. | | | | |
| 4. The method for determining the length ratio in Requirement ⑤ was: among the preferentially selected primary particles, if any one primary particle failed to meet the ratio requirement in Requirement ⑤: the ratio of the length of the longest fragment in the fractured single-sheet layer to the total length of the single-sheet layer, it was recorded as the ratio < 50%; conversely, if all met the ratio requirement in Requirement ⑤, it was recorded as the ratio ≥ 50%. | | | | |
| 5. The method for determining the length ratio in Requirement ⑥ was: among the preferentially selected primary particles, if any one primary particle failed to meet the ratio requirement in Requirement ⑥: the ratio of the sum of the total length of all unfractured single-sheet layers and the total length of the longest fragment in all fractured single-sheet layers to the total length of all single-sheet layers, it was recorded as the ratio < 60%; conversely, if all met the ratio requirement in Requirement ⑥, it was recorded as the ratio ≥ 60%. | | | | |

**Table 3. Precursor Parameters**

| Item | Particle size D50 (µm) | FWHM (001) | FWHM (101) | BET (m²/g) |
|---|---|---|---|---|
| Example 1 | 14 | 0.351 | 0.348 | 9.95 |
| Example 2 | 14 | 0.460 | 0.379 | 15.91 |
| Example 3 | 14 | 0.507 | 0.409 | 9.29 |
| Example 4 | 14 | 0.436 | 0.455 | 11.61 |
| Example 5 | 10 | 0.450 | 0.500 | 6.84 |
| Example 6 | 14 | 0.415 | 0.368 | 8.08 |
| Example 7 | 14 | 0.471 | 0.523 | 10.61 |
| Example 8 | 4 | 0.511 | 0.498 | 8.14 |
| Example 9 | 8 | 0.431 | 0.377 | 6.75 |
| Comparative Example 1 | 14 | 0.649 | 0.614 | 15.22 |
| Comparative Example 2 | 14 | 0.650 | 0.678 | 20.73 |
| Comparative Example 3 | 4 | 1.037 | 0.865 | 43.87 |

2000g of the precursors prepared in Examples 1-7 and Comparative Examples 1-2 were weighed separately and mixed uniformly with LiOH·H₂O at a molar ratio of 1:1.03 using a highspeed mixer. The mixture was then sintered in a box furnace under an air atmosphere, wherein the sintering temperature was 780°C and the high-temperature sintering duration was 12h. After cooling to room temperature, the product was crushed and sieved, so as to obtain the positive electrode material.

The electrochemical performance was tested by the coin-type half-cell: the above positive electrode material, conductive carbon black and binder PVDF (polyvinylidene fluoride) were mixed into slurry according to the ratio of 8:1:1. The slurry was coated onto aluminum foil to make a positive electrode sheet, a negative electrode sheet was made of lithium metal sheet, and the electrolyte was 1mol/L LiPF₆ / EC:DMC (volume ratio of 1:1). The coin cells were assembled in a vacuum glove box by using cell cases, positive and negative electrodes, separators, springs, and spacers. The electrochemical performance was evaluated using a Land battery test system.

The testing results are shown in Table 4.

**Table 4. Electrochemical test results**

| Item | 0.1C discharge capacity (mAh/g) | 1C discharge capacity (mAh/g) | 1C/0.1C rate | Capacity retention after 50 cycles at 1C (%) |
|---|---|---|---|---|
| Example 1 | 234.8 | 216.4 | 92.16% | 95.1 |
| Example 2 | 233.4 | 214.2 | 91.78% | 95.5 |
| Example 3 | 233.7 | 215.2 | 92.09% | 94.6 |
| Example 4 | 231.3 | 210.7 | 91.08% | 95.1 |
| Example 5 | 206.8 | 193.3 | 93.47% | 96.3 |
| Example 6 | 231.8 | 212.9 | 91.83% | 95.7 |
| Example 7 | 235.3 | 217.0 | 92.21% | 95.0 |
| Example 8 | 241.4 | 226.9 | 93.99% | 91.3 |
| Example 9 | 210.9 | 195.6 | 92.73% | 95.5 |
| Comparative Example 1 | 233.9 | 217.1 | 92.81% | 91.2 |
| Comparative Example 2 | 237.1 | 221.9 | 93.57% | 87.3 |
| Comparative Example 3 | 239.6 | 220.5 | 92.03% | 80.4 |

From Table 4, it can be seen that the precursors prepared in Comparative Example 1 and Comparative Example 2 lack the high regularity and integrity of the primary particles as the precursors in the present disclosure, and the edges of the single-sheet layers constituting the primary particles are uneven and more easily broken, so these samples fail to simultaneously balance capacity, rate capability, and cycling performance. The samples of Examples 1-3 have the capacity and rate capability close to that of Comparative Examples 1-2, and their cycle performance is obviously better than that of Comparative Examples 1-2. This performance advantage stems from the fact that, based on a similar porous, radiating growth structure, Examples 1-3 further optimize the regularity and integrity of the primary particles, significantly narrowing the full width at half maximum of XRD, thereby reducing the overall crystal defects of the secondary particles and further improving crystallinity, which in turn reduces side reactions and improves cycle performance. In addition, the precursors prepared in Example 8 and Comparative Example 3 are all small-particle products. Compared with Example 8, the edge of the single-sheet layer in Comparative Example 3 has uneven edges with concave-convex shapes, and the single-sheet layers are staggered and stacked irregularly. Although it can meet the characteristics of low fracture count in primary particles, resulting in high initial capacity, it has rapid cycle decay, making it difficult to have practical application value.

Finally, it should be explained that the above examples are only configured to illustrate the technical solutions of the present disclosure, but not to limit it. Although the present disclosure has been described in detail with reference to the foregoing examples, it should be understood by those skilled in the art that the technical solutions described in the foregoing examples can still be modified, or some or all of its technical features can be replaced by equivalents; However, these modifications or substitutions do not make the essence of the corresponding technical solutions deviate from the scope of the technical solutions of various examples of this present disclosure.

Furthermore, those skilled in the art will understand that although some examples herein include certain features included in other examples rather than other features, the combination of features in different examples is within the scope of the present disclosure and forms different examples. For example, any one of the examples claimed in the above claims can be used in any combination. The information disclosed in the background art is only intended to deepen the understanding of the overall background art of the present disclosure and should not be construed as acknowledging or implying in any way that such information constitutes prior art known to those skilled in the art.

### Industrial Practicability

A lithium-ion battery positive electrode material precursor and a preparation method therefor, a lithium-ion battery positive electrode material, a lithium-ion battery and an electrically related equipment are provided in the present disclosure, relating to the field of lithium-ion batteries. The lithium-ion battery positive electrode material precursor comprises a plurality of primary particles, the primary particle comprises a plurality of neatly stacked single-sheet layers, and the edges of the single-sheet layers are flat. The preparation method for the lithium-ion battery positive electrode material precursor comprises: introducing raw materials including a nickel-containing metal salt solution, a precipitant and a complexing agent into a base solution for reaction, and during the reaction, controlling the pH value to be 9.8-11.3, the ammonia concentration to be 2g/L-12g/L, and the concentration of nickel in a supernatant to be 70ppm-350ppm; and after the reaction, carrying out solid-liquid separation, drying, sieving and demagnetizing to obtain the lithium-ion battery positive electrode material precursor. In the lithium-ion battery positive electrode material precursor, the plurality of single-sheet layers forming the primary particles have the characteristics of high regularity and integrity, and the prepared positive electrode material has higher cycle, capacity and safety.

Furthermore, it is understood that the lithium-ion battery positive electrode material precursor and the preparation method therefor, the lithium-ion battery positive electrode material, the lithium-ion battery and the electrically related equipment provided in the present disclosure are reproducible and can be applied in various industrial applications. For example, the lithium-ion battery positive electrode material precursor and the preparation method therefor, the lithium-ion battery positive electrode material, the lithium-ion battery and the electrically related equipment provided in the present disclosure can be used in the field of lithium-ion batteries.

## Claims

1. A lithium-ion battery positive electrode material precursor, **characterized in that** a precursor secondary particle comprises N primary particles, and a primary particle comprises N neatly stacked single-sheet layers, and an edge of the single-sheet layer is flat, wherein
N is a positive integer and N≥2.

2. The lithium-ion battery positive electrode material precursor according to claim 1, wherein in the precursor secondary particle, at least 60% of the primary particles meet requirement ①: a primary particle length is not less than 200nm, a primary particle width is not less than 50nm, and a length-to-width ratio of the primary particles is not less than 1.2;
preferably, in the precursor secondary particle, at least 70% of the primary particles meet requirement ②: the primary particle length is 200nm-3000nm, the primary particle width is 50nm-300nm, and the length-to-width ratio of the primary particles is not less than 1.2.

3. The lithium-ion battery positive electrode material precursor according to claim 1, wherein in the precursor secondary particle, at least 20% of the primary particles meet requirement ③:
the single-sheet layers comprise a fractured single-sheet layer and/or an unfractured single-sheet layer, and the fractured single-sheet layer is in a linear shape or a kinking shape, and
when the fractured single-sheet layer is in the kinking shape, a minimum included angle γ between an extension line of a linear portion and a kinking portion is less than or equal to 30°.

4. The lithium-ion battery positive electrode material precursor according to claim 1, wherein in the precursor secondary particle, at least 20% of the primary particles meet at least one of following requirements:
requirement ⑤: in the primary particle, the single-sheet layers comprise a fractured single-sheet layer and/or an unfractured single-sheet layer, and a fracture count of each fractured single-sheet layer is less than or equal to 2;
requirement ⑤: in the primary particle, the single-sheet layers comprise the fractured single-sheet layer and/or the unfractured single-sheet layer, and a length of a longest fragment in each fractured single-sheet layer accounts for not less than 50% of a total length of the single-sheet layer in which the fractured single-sheet layer is located;
requirement ⑥: in the primary particle, the single-sheet layers comprise the fractured single-sheet layers and/or the unfractured single-sheet layers, a sum of a total length of all unfractured single-sheet layers and a total length of the longest fragments from all fractured single-sheet layers accounts for not less than 60% of a total length of all single-sheet layers.

5. The lithium-ion battery positive electrode material precursor according to any one of claims 1-4, meeting at least one of following conditions:
A. a particle size D50 of the precursor is 4µm-20µm;
B. a full width at half maximum FWHM (001) of the precursor with a (001) facet corresponding to a diffraction angle 2θ = 19.2±1° and a full width at half maximum FWHM (101) of the precursor with a (101) facet corresponding to a diffraction angle 20 = 38.5±1° are both less than 0.550°;
C. a specific surface area BET of the precursor is 3m²/g-20m²/g;
D. a general chemical formula of the precursor is NiₓM₁₋ₓ(OH)₂, wherein 0.6 ≤ x < 1, and M is at least one of Co, Mn, Al, Fe, Ti, Zr, Mo, Cr, W, B, Mg, Ba, Nb and Sr, and
E. a chemical formula of the precursor is NiₓCo_{y}Mn_{z}M¹_{1-x-y-z}(OH)₂, wherein 0.6 ≤ x < 1, 0≤y≤0.4, 0≤z≤0.4, and 1-x-y ≥ 0; M¹ is at least one of Al, Fe, Ti, Zr, Mo, Cr, W, B, Mg, Ba, Nb and Sr.

6. A preparation method of the lithium-ion battery positive electrode material precursor according to any one of claims 1-5, **characterized by** comprising:
introducing a raw material containing a nickel-containing metal salt solution, a precipitant and a complexing agent into a base solution for reaction, and during the reaction, controlling a pH value to be 9.8-11.3, an ammonia concentration to be 2g/L-12g/L, and a concentration of nickel in a supernatant to be 70ppm-350ppm; and after the reaction, carrying out a solid-liquid separation, a drying, a sieving and a demagnetizing, so as to obtain the lithium-ion battery positive electrode material precursor.

7. The preparation method according to claim 6, wherein at least one of following conditions is satisfied:
a. a nickel-containing metal in the nickel-containing metal salt solution contains Ni, and at least one of Co and Mn;
b. the nickel-containing metal in the nickel-containing metal salt solution only contains Ni;
c. the raw material introduced into the base solution further comprises a doping metal salt solution, wherein a doping metal in the doping metal salt solution comprises at least one of Al, Fe, Ti, Zr, Mo, Cr, W, B, Mg, Ba, Nb and Sr;
d. the precipitant comprises a sodium hydroxide solution, and the complexing agent comprises an ammonia solution;
e. a flow rate of the nickel-containing metal salt solution is 2%/h -10%/h of an available volume of a reaction vessel, a flow rate of the precipitant is 0.5%/h-3.5%/h of the available volume of the reaction vessel, and a flow rate of the complexing agent is 0.01%/h-1%/h of the available volume of the reaction vessel;
f. the base solution comprises the sodium hydroxide solution, the ammonia solution and a water;
g. a pH of the base solution is 10.5-12.3, and an ammonia concentration of the base solution is 3.4g/L-6g/L, and
h. a mother liquor is discharged during the reaction process, and a total liquid feeding rate equals a sum of flow rates of feeding the raw materials into the base solution simultaneously, and a discharge rate of the mother liquor is consistent with a total liquid feeding rate.

8. A lithium-ion battery positive electrode material, **characterized in that** a raw material of the lithium-ion battery positive electrode material comprises the lithium-ion battery positive electrode material precursor according to any one of claims 1-5.

9. A lithium-ion battery, **characterized by** comprising the lithium-ion battery positive electrode material according to claim 8.

10. An electrically related equipment, **characterized by** comprising the lithium-ion battery according to claim 9.
